# EUROPEAN PATENT SPECIFICATION

(11) **EP 3 872 422 B1**
(45) Date of publication and mention of the grant of the patent: **16.08.2023**
(21) Application number: 19903134.5
(22) Date of filing: 26.12.2019
(51) Int. Cl.: F25B 47/02, F24F 11/42, F24F 11/64, F24F 11/86, F24F 11/871, F24F 110/40, F24F 140/20

(54) **AIR CONDITIONING SYSTEM, AND METHOD AND DEVICE FOR CONTROLLING AIR CONDITIONING SYSTEM**
KLIMATISIERUNGSSYSTEM UND VERFAHREN ZUR STEUERUNG DES KLIMATISIERUNGSSYSTEMS
SYSTÈME DE CLIMATISATION, ET PROCÉDÉ ET DISPOSITIF DE COMMANDE DUDIT SYSTÈME

(30) Priority: 29.12.2018 CN 201811634416; 22.04.2019 CN 201910325595
(43) Date of publication of application: 01.09.2021
(73) Proprietor: GD Midea Air-Conditioning Equipment Co., Ltd., Foshan, Guangdong 528311 (CN)
(72) Inventor: DU, Yanjun, Foshan, Guangdong 528311 (CN); WU, Jianhua, Foshan, Guangdong 528311 (CN); LI, Jinbo, Foshan, Guangdong 528311 (CN)
(74) Representative: Lam, Alvin
(86) International application number: PCT/CN2019/128713
(87) International publication number: WO 2020/135591

(56) References cited:
- EP-A1- 2 330 359
- EP-A1- 2 757 327
- DE-T5-112016 003 578

## Description

### FIELD

The present invention relates to the field of an air conditioning system technology, in particular to an air conditioning system, and a method and device for controlling an air conditioning system.

### BACKGROUND

In general, an air conditioning system will be adversely affected largely for normal heating by a frosting issue in winter, especially in a cold and humid area. A thicker frosting layer will not only weaken a heat transfer coefficient of an outdoor unit, but also greatly reduce a heating capacity of the air conditioning system. Besides, continuous operation will cause damage to the compressor.

At present, reverse cycle defrosting, as common defrosting for the air conditioning system, achieves a reverse cycle for a general heating cycle by reversing via a four-way valve. After conversion via the four-way valve, the outdoor unit changes from an evaporator in a heating stage to a condenser, by which a high-temperature and high-pressure refrigerant at an outlet of the condenser gradually melts the frosting layer at the outdoor unit.

However, during the reverse cycle defrosting, an indoor fan and an outdoor fan are both in a turn-off state, no heat transfer occurs from the indoor side, and energy for defrosting comes from power consumption of the compressor and heat stored in a pipeline of the indoor unit at the end of heating. Because of a low power of the compressor after adjustment and a sudden increase of superheat after throttling, it will cause lubricating oil blockage in an throttling element, resulting in an abnormality for the throttling element, which will lead to not only a declined capacity of the air conditioning system, but also a reduced stability and reliability of the air conditioning system.
EP 2 330 359 A1 relates generally to an air conditioner for removing frost adhered to an outdoor heat exchanger with use of a heat pump. Moreover, EP 2 330 359 A1 discloses a method for controlling an air conditioning system, comprising the following steps: identifying that the air conditioning system needs to stop heating, controlling the air conditioning system to turn off an indoor fan before a first preset time period for stopping heating; controlling the air conditioning system to stop heating and to enter a defrosting stage; identifying that the air conditioning system needs to restart heating, and controlling the air conditioning system to restart heating.
EP 2 757 327 A1 relates generally to a refrigerating and air-conditioning apparatus which, during a heating operation under air conditions leading to formation of frost, performs a defrosting operation while simultaneously continuing the heating operation. DE 11 2016 003578 T5 relates generally to an air conditioning device having a blower, a compressor, a radiator, a decompressor, a heat absorber, and a controller.

### SUMMARY

Aspects of the invention are set out in the claims. The invention solves the problem of abnormal oil blockage in a throttling element during a defrosting stage and an early stage of reheating, thus greatly enhancing operation stability and reliability of the air conditioning system.

The present invention provides in embodiments one or more technical solutions, having at least the following technical effects or advantages. The scope of the invention is exclusively defined in the appended claims.

In the present invention, it can identify that the air conditioning system needs to stop heating, control the air conditioning system to turn off the indoor fan before the first preset time period for stopping heating; control the air conditioning system to stop heating and to enter the defrosting stage; identify that the air conditioning system needs to restart heating, and control the air conditioning system to restart heating; and control the air conditioning system to delay the second preset time period before turning on an outdoor fan. As such, the indoor fan is turned off ahead of turning off the compressor for heating and the outdoor fan is delayed to turn on after turning on the compressor for heating, thereby solving abnormal oil blockage in a throttling element during a defrosting stage and an early stage of reheating, thus greatly enhancing operation stability and reliability of the air conditioning system, which is easy to realize.

### BRIEF DESCRIPTION OF THE DRAWINGS

Figure 1 is a flow chart showing a method for controlling an air conditioning system according to an embodiment of the present invention;
Figure 2 is a schematic diagram showing changes among an operating frequency of a compressor, a blowing volume of an indoor fan and a blowing volume of an outdoor fan according to an embodiment of the present invention;
Figure 3 is a block diagram showing a device for controlling an air conditioning system according to an embodiment of the present invention;
Figure 4 is a block diagram showing an air conditioning system according to an embodiment of the present invention; and
Figure 5 is a block diagram showing electronic equipment according to an embodiment of the present invention.

### DETAILED DESCRIPTION OF EMBODIMENTS

In the present invention, it can identify that the air conditioning system needs to stop heating, control the air conditioning system to turn off the indoor fan before the first preset time period for stopping heating; control the air conditioning system to stop heating and to enter the defrosting stage; identify that the air conditioning system needs to restart heating, and control the air conditioning system to restart heating; and control the air conditioning system to delay the second preset time period before turning on an outdoor fan. As such, the indoor fan is turned off ahead of turning off the compressor for heating and the outdoor fan is delayed to turn on after turning on the compressor for heating, thereby solving oil blockage in a heating throttling element due to extreme low temperature and pressure in a low temperature area of the air conditioning system at the end of the defrosting stage, thus greatly enhancing operation stability and reliability of the air conditioning system, which is easy to realize.

In order to better understand the above technical solutions, the illustrative embodiments of the present invention will be described in more detail below with reference to the drawings. Although the drawings show the illustrative embodiments of the present invention, it should be understood that the present invention can be implemented in various manner and should not be limited by the embodiments set forth herein. On the contrary, these embodiments are provided for a more thorough understanding of the present invention and to fully convey the scope of the present invention to those skilled in the art The scope of the invention is exclusively defined in the appended claims.

The air conditioning system, and the method and device for controlling an air conditioning system provided in embodiments of the present invention are described below with reference to drawings.

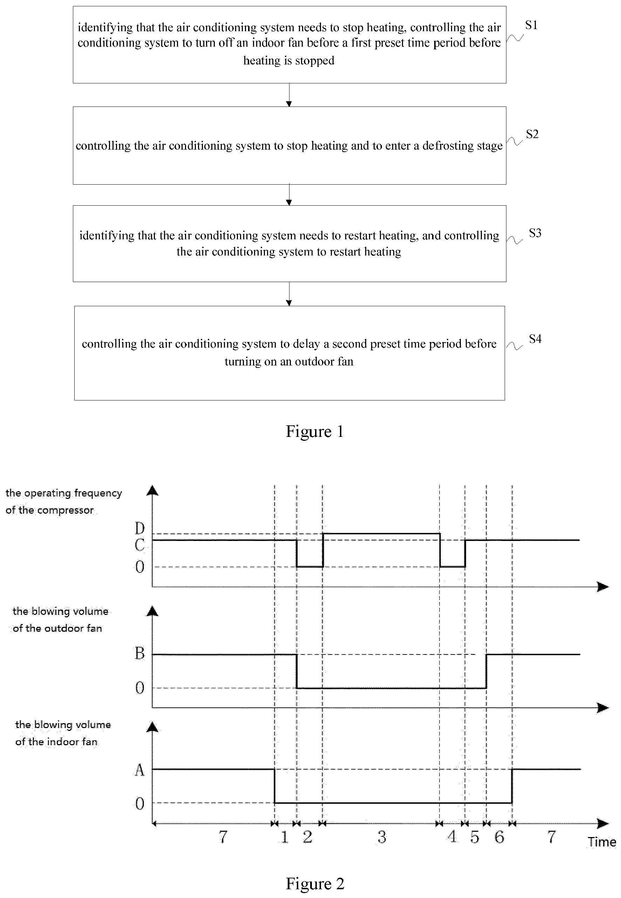

Figure 1 is a flow chart showing a method for controlling an air conditioning system according to an embodiment of the present invention. As shown in Figure 1, the method for controlling an air conditioning system includes the following steps S1 to S4.

At S1, it is identified that the air conditioning system needs to stop heating, and the air conditioning system is controlled to turn off an indoor fan before a first preset time period for stopping heating.

It would be understood that, as shown in Figure 2, during an entire controlling process for an air conditioning system, it may include the following stages: Stage 1 from an indoor fan being turned off to a compressor being stopped for heating; Stage 2 from the compressor being stopped for heating to the compressor being started for defrosting; Stage 3 from the compressor being started for defrosting to the compressor being stopped for defrosting; Stage 4 from the compressor being stopped for defrosting to the compressor being started for heating; Stage 5 from the compressor being started for heating to an outdoor fan being turned on; Stage 6 from the outdoor fan being turned on to the indoor fan being turned on; and Stage 7 from the indoor fan being turned on to the indoor fan being turned off.

For example, the first preset time period may be 3 min. When it is identified that the air conditioning system needs to stop heating, the air conditioning system may be controlled to turn off the indoor fan, and the air conditioning system is controlled to stop heating after 3 min. It should be noted that the first preset time period may be alternatively set according to an actual situation, which will not be particularly limited here.

In an embodiment of the present invention, controlling the air conditioning system to stop heating includes: identifying that an outlet temperature of a condenser in the air conditioning system is lower than a first preset temperature value; and controlling the air conditioning system to immediately stop heating and to maintain for a third preset time period.

It would be understood that, in embodiments of the present invention, it may judge whether it is necessary to control the air-conditioning system to stop heating within the first preset time period according to the outlet temperature of the condenser in the air conditioning system. For example, the first preset time period is 3 min, when the indoor fan has been turned off for 1 min, and when the outlet temperature of the condenser in the air conditioning system is lower than a first preset temperature value tep1, where the first preset temperature value tep1 may be -10°C, the air conditioning system is controlled to immediately stop heating. A third preset time period is 2 min; an outlet and an inlet of the condenser are positions of an outlet of an outdoor exchanger and an inlet of an indoor exchanger when the system is in a refrigerating cycle; and the first preset temperature value tep1 may be in a range between -18 to -6°C.

It should be noted that, assuming that it is not detected within 3 min that the outlet temperature of the condenser in the air conditioning system is lower than the first preset temperature value tep1, the air conditioning system is controlled to immediately stop heating after 3 min, and the Stage 2 from the compressor being stopped for heating to the compressor being started for defrosting is entered.

At S2, the air conditioning system is controlled to stop heating and to enter a defrosting stage.

It should be understood that, after the Stage 1 from the indoor fan being turned off to the compressor being stopped for heating is completed, the Stage 2 from the compressor being stopped for heating to the compressor being started for defrosting is entered. That is the air conditioning system is controlled to stop heating, before to enter the defrosting stage.

According to an embodiment of the present invention, said entering a defrosting stage includes: identifying an air pressure difference between an suction air pressure and an exhaust air pressure of the air conditioning system is lower than a preset air pressure value; and controlling the air conditioning system to immediately enter the defrosting stage.

It should be understood that, in embodiments of the present invention, it may judge whether to control the air conditioning system to enter the defrosting stage according to the air pressure difference between the suction air pressure and the exhaust air pressure of the air conditioning system. For example, when the air pressure difference between the suction air pressure and the exhaust air pressure of the air conditioning system is lower than the preset air pressure value, the air conditioning system is controlled to immediately enter the defrosting stage.

For example, the preset air pressure value may be Δp, e.g., Δp is 0.005 MPa, when the air pressure difference between the suction air pressure and the exhaust air pressure of the air conditioning system is lower than 0.005 MPa, the air conditioning system is controlled to immediately enter the defrosting stage. It should be noted that said to immediately enter the defrosting stage is an idealized operation; whereas deviation is allowed within 3 seconds in practical control and the preset air pressure value Δp ranges from 0.001 to 0.05 MPa. The above examples are merely illustrative, which cannot be construed to limit the present invention.

According to an embodiment of the present invention, before the air conditioning system is controlled to stop heating and to enter the defrosting stage, the method further includes: controlling the compressor in the air conditioning system to maintain an operating frequency same as that before the heating is stopped, and to turn off after the heating is stopped; and controlling the outdoor fan to maintain a blowing volume same as that before the heating is stopped to continue supplying air, and to turn off after the heating is stopped.

It should be understood that, as shown in Figure 2, before the air conditioning system is controlled to stop heating and to enter the defrosting stage, i.e., during the Stage 1 from the indoor fan being turned off to the compressor being stopped for heating, the operating frequency of the compressor may be C, and the blowing volume of the outdoor fan is B, at the end of heating, i.e., at the Stage 2 from the compressor being stopped for heating to the compressor being started for defrosting, the operating frequency of the compressor is controlled to change to zero, i.e., is controlled to stop operation, and the blowing volume of the outdoor fan is controlled to change to zero, i.e., the outdoor fan is turned off.

It should be noted that the operating frequency C of the compressor may be 80 Hz, and the blowing volume B of the outdoor fan may be 700 m³/h, both of which may be optimal values or optimal ranges obtained by those skilled in the art from a large amount of data experiments, and will not be particularly limited here.

According to an embodiment of the present invention, after entering the defrosting stage, the method further includes: identifying that an outlet temperature of a condenser in the air conditioning system is greater than a second preset temperature value, and controlling the air conditioning system to immediately stop defrosting.

It should be understood that, in embodiments of the present invention, after entering the defrosting stage, it may judge whether to control the air conditioning system to immediately stop the defrosting stage according to the outlet temperature of the condenser. For example, when the outlet temperature of the condenser in the air conditioning system is greater than the second preset temperature value Tep2, where the second preset temperature value Tep2 may be 8°C, the air conditioning system is controlled to immediately stop the defrosting stage.

It should be noted that an outlet and an inlet of the condenser are positions of an outlet of an outdoor exchanger and an inlet of an indoor exchanger when the system is in a refrigerating cycle; and the second preset temperature value Tep2 may be in a range between 8 to 14°C.

At S3, it is identified that the air conditioning system needs to restart heating, and the air conditioning system is controlled to restart heating.

According to an embodiment of the present invention, identifying that the air conditioning system needs to restart heating and controlling the air conditioning system to restart heating include: identifying an air pressure difference between an suction air pressure and an exhaust air pressure of the air conditioning system is lower than a preset air pressure value, and controlling the air conditioning system to restart heating.

It should be understood that it may judge whether to control the air conditioning system to restart heating according to the air pressure difference between the suction air pressure and the exhaust air pressure of the air conditioning system. For example, when the air pressure difference between the suction air pressure and the exhaust air pressure of the air conditioning system is lower than the preset air pressure value, the air conditioning system is controlled to restart heating. To restart heating is an idealized operation; whereas deviation is allowed within 3 seconds in practical control and the preset air pressure value can be set by those skilled in the art according to the practical situation, which will not be particularly limited here.

For example, the preset air pressure value may be Δp, e.g., Δp is 0.005 MPa, when the air pressure difference between the suction air pressure and the exhaust air pressure of the air conditioning system is lower than 0.005 MPa, the air conditioning system is controlled to restart heating. It should be noted that the preset air pressure value Δp ranges from 0.001 to 0.05 MPa. The above examples are merely illustrative, which cannot be construed to limit the present invention.

According to an embodiment of the present invention, before controlling the air conditioning system to restart heating, the method further includes: controlling the compressor in the air conditioning system to enter a turn-off state from an operating state, and controlling the outdoor fan and the indoor fan to continue being in the turn-off state.

It should be understood that, as shown in Figure 2, before the air conditioning system is controlled to restart heating, i.e., during the Stage 3 from the compressor being started for defrosting to the compressor being stopped for defrosting, the operating frequency of the compressor in the air conditioning system is D, and the outdoor fan and the indoor fan are in the turn-off state. When changing from the Stage 3 from the compressor being started for defrosting to the compressor being stopped for defrosting to the Stage 4 from the compressor being stopped for defrosting to the compressor being started for heating, the operating frequency of the compressor in the air conditioning system may be controlled to decrease to zero from D, i.e., the air conditioning system is controlled to enter the turn-off state, and the outdoor fan and the indoor fan are controlled to continue being in the turn-off state.

It should be noted that the operating frequency D of the compressor may be 90 Hz, which may be an optimal value or optimal range obtained by those skilled in the art from a large amount of data experiments, and will not be particularly limited here.

At S4, the air conditioning system is controlled to delay a second preset time period before turning on an outdoor fan.

According to an embodiment of the present invention, said controlling the air conditioning system to delay a second preset time period before turning on the outdoor fan includes: identifying that an outlet temperature of a condenser in the air conditioning system is lower than a third preset temperature value, and controlling the air conditioning system to stop delaying of the outdoor fan and to immediately turn on the outdoor fan.

It should understood that, when it is detected within the second preset time period that the outlet temperature of the condenser in the air conditioning system is lower than the third preset temperature value, the outdoor fan is turned on immediately; if it is not detected within the second preset time period that the outlet temperature of the condenser in the air conditioning system is lower than the third preset temperature value, the outdoor fan is turned on when the second preset time period is reached.

For example, the second preset time period may be 3 min, and the third preset temperature value is 0°C, if it is identified within 3 min that the outlet temperature of the condenser in the air conditioning system is lower than 0°C, the outdoor fan is turned on immediately; if it is not identified within 3 min that the outlet temperature of the condenser in the air conditioning system is lower than 0°C, the outdoor fan is turned on immediately when 3 min is reached.

It should be noted that an outlet and an inlet of the condenser are positions of an outlet of an outdoor exchanger and an inlet of an indoor exchanger when the system is in a refrigerating cycle; and the third preset temperature value Tep3 may be in a range between -8 to 2°C.

According to an embodiment of the present disclosure, before said to immediately turn on the outdoor fan, the method further includes: controlling the compressor in the air conditioning system to operate at a preset operating frequency; and controlling the outdoor fan and the indoor fan to continue being in the turn-off state.

It should be understood that, assuming that the preset operating frequency is C, as shown in Figure 2, before the outdoor fan is turned on immediately, i.e., the Stage 5 from the compressor being started for heating to an outdoor fan being turned on, during which the operating frequency of the compressor is C, and the blowing volume for either the outdoor fan or the indoor fan is zero, that is the outdoor fan and the indoor fan continue are both in the turn-off state.

According to an embodiment of the present invention, after turning on the outdoor fan, the method further includes: controlling the outdoor fan to operate for a fourth preset time period; and turning on the indoor fan after the fourth preset time period.

For example, the fourth preset time period is 5 min, as shown in Figure 2, at the Stage 6 from the outdoor fan being turned on to the indoor fan being turned on, after the outdoor fan is turned on to operate for 5 min, the indoor fan may be controlled to turned on, where the blowing volume of the outdoor fan may be B, and the blowing volume of the indoor fan is changed from zero to A. It should be noted that the blowing volume B of the outdoor fan may be 700 m³/h, and the blowing volume A of the indoor fan may be 3000 m³/h, both of which may be optimal values or optimal ranges obtained by those skilled in the art from a large amount of data experiments, and will not be particularly limited here.

According to an embodiment of the present invention, the above method for controlling an air conditioning system further includes: identifying that an outlet temperature of an evaporator in the air conditioning system is greater than a fourth preset temperature value; and controlling the air conditioning system to stop delaying of the indoor fan and to immediately turn on the indoor fan.

It should be understood that, in embodiments of the present invention, it may judge whether to control the air conditioning system to immediately turn on the indoor fan according to the outlet temperature of the evaporator within the fourth preset time period. For example, within the fourth preset time period, when the outlet temperature of the evaporator in the air conditioning system is greater than the fourth preset temperature value, the indoor fan is turned on immediately.

For example, the fourth preset time period may be 5 min, and the fourth preset temperature value may be Tep4, which may be 28°C, if it is detected within 5 min that the outlet temperature of the evaporator in the air conditioning system is greater than 28°C, the indoor fan is turned on immediately.

It should be noted that an outlet and an inlet of the evaporator are positions of an outlet of an outdoor exchanger and an inlet of an indoor exchanger when the system is in a refrigerating cycle; and the fourth preset temperature value Tep4 may be in a range between 20 to 30°C.

According to an embodiment of the present invention, before turning on the indoor fan, the method further includes: controlling the compressor in the air conditioning system to continue operating at the preset operating frequency; and controlling the outdoor fan to supply air with a first set blowing volume, and controlling the indoor fan to continue being in the turn-off state.

It should be understood that, as shown in Figure 2, before the indoor fan is turned on, i.e., the Stage 6 from the outdoor fan being turned on to the indoor fan being turned on, the preset operating frequency of the compressor in the air conditioning system may be C, during which the compressor in the air conditioning system may be controlled to continue operating at the preset operating frequency C, assuming that the first set blowing volume is B, it may control the outdoor fan to operate with the first set blowing volume B and control the indoor fan to continue in the turn-off state before the indoor fan is turned on.

According to an embodiment of the present invention, after turning on the indoor fan, the method further includes: controlling the indoor fan to operate for a fifth preset time period, and turning off the indoor fan after the fifth preset time period.

For example, the fifth preset time period may be 120 min, as shown in Figure 2, at the Stage 7 from the indoor fan being turned on to the indoor fan being turned off, after the indoor fan operates for 120 min, it may turn off the indoor fan. During the Stage 7, the blowing volume of the indoor fan may be A, such as 3000 m³/h, which may be an optimal value or optimal range obtained by those skilled in the art from a large amount of data experiments, and will not be particularly limited here.

According to an embodiment of the present invention, the above method for controlling the air conditioning system further includes: identifying that the outlet temperature of the condenser in the air conditioning system is lower than a fifth preset temperature value, and controlling the air conditioning system to turn off the indoor fan and to immediately turn off the outdoor fan.

It should be understood that, in embodiments of the present invention, it may judge within the fifth preset time period whether to control the air conditioning system to be lower than the fifth preset temperature value, to control the air conditioning system to turn off the indoor fan according to the outlet temperature of the condenser in the air conditioning system. For example, within the fifth preset time period, it is judged whether to control the air conditioning system to be lower than the fifth preset temperature value according to the outlet temperature of the condenser in the air conditioning system, the outdoor fan is turned off immediately.

For example, the fifth preset time period may be 120 min, and the fifth preset temperature value may be Tep5, which for example is -15°C. Within 120 min, if the outlet temperature of the condenser in the air conditioning system controls the air conditioning system to be lower than -15°C, the outdoor fan is turned off immediately, thereby greatly improving the operation stability and reliability of the air conditioning system.

It should be noted that an outlet and an inlet of the condenser are positions of an outlet of an outdoor exchanger and an inlet of an indoor exchanger when the system is in a refrigerating cycle; and the fifth preset temperature value Tep5 may be in a range between -20 to -8°C, satisfying tep 1+5°C>tep5 >tep 1+3°C.

According to an embodiment of the present invention, before turning off an outdoor fan, the method further includes: controlling the compressor in the air conditioning system to continue operating at the preset operating frequency; and controlling the outdoor fan to supply air with the first set blowing volume and controlling the indoor fan to supply air with a second set blowing volume.

In specific, as shown in Figure 2, before turning off the outdoor fan, i.e., at the Stage 1 from an indoor fan being turned off to a compressor being stopped for heating, the operating frequency of the compressor in the air conditioning system may be C, that is the compressor in the air conditioning system operates at the preset operating frequency; the outdoor fan is controlled to supply air with the first set blowing volume B, and the indoor fan is controlled to supply air with the second set blowing volume, that is the blowing volume of the indoor fan is decreased to zero.

According to an embodiment of the present invention, the above method for controlling an air conditioning system further includes: controlling the indoor fan and the outdoor fan to be in the turn-off state during the defrosting stage; and controlling the compressor in the air conditioning system to increase the operating frequency during the defrosting stage.

It should be understood that, at the Stage 2 from the compressor being stopped for heating to the compressor being started for defrosting and the Stage 3 from the compressor being started for defrosting to the compressor being stopped for defrosting, i.e., during the defrosting stage, in an embodiment of the present disclosure, it may control the blowing volume of either the indoor fan or the outdoor fan to be zero, that is the indoor fan and the outdoor fan are in the turn-off state; and it may control the compressor in the air conditioning system to increase the operating frequency, so as to effectively improve the effect of the defrosting stage, and thus greatly enhancing the operation stability and reliability of the air conditioning system.

According to embodiments of the present invention, the method for controlling an air conditioning system can identify that the air conditioning system needs to stop heating, control the air conditioning system to turn off the indoor fan before the first preset time period for stopping heating; control the air conditioning system to stop heating and to enter the defrosting stage; identify that the air conditioning system needs to restart heating, and control the air conditioning system to restart heating; and control the air conditioning system to delay the second preset time period before turning on the outdoor fan. As such, the indoor fan is turned off ahead of turning off the compressor for heating, thus greatly shortening the defrosting period, and reducing compressor abrasion caused by a large amount of refrigerants dissolved in the compressor and thus the extreme low viscosity in the oil sump due to the extreme low temperature of the compressor after the defrosting stage. Besides, the outdoor fan is delayed to turn on after turning on the compressor for heating, thus avoiding the heat left in the outdoor fan during the defrosting stage from dissipating into environment. In addition, the operating frequency of the compressor is increased during the defrosting stage, thus avoiding the heating throttle element from the oil blockage caused by the extreme low temperature and pressure in the low pressure area of the system at the end of the defrosting stage, thereby greatly enhancing the operation stability and reliability of the air conditioning system.

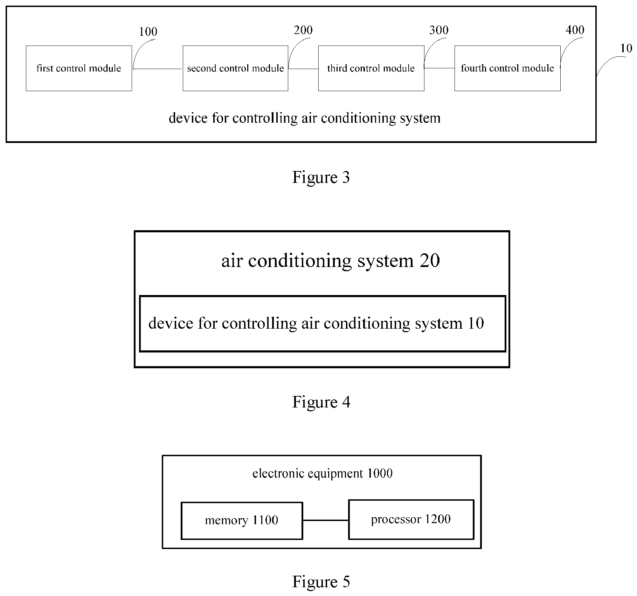

Figure 3 is a block diagram showing a device for controlling an air conditioning system according to an embodiment of the present disclosure. As shown in Figure 3, the device 10 for controlling an air conditioning system includes: a first control module 100, a second control module 200, a third control module 300, and a fourth control module 400.

The first control module 100 is configured to identify that the air conditioning system needs to stop heating, control the air conditioning system to turn off an indoor fan before a first preset time period for stopping heating. The second control module 200 is configured to control the air conditioning system to stop heating and to enter a defrosting stage. The third control module 300 is configured to identify that the air conditioning system needs to restart heating, and control the air conditioning system to restart heating. The fourth control module 400 is configured to control the air conditioning system to delay a second preset time period before turning on an outdoor fan.

According to an embodiment of the present invention, the above device for controlling an air conditioning system further includes: a fifth control module, configured to control the indoor fan and the outdoor fan to be in a turn-off state during the defrosting stage; and a sixth control module, configured to control a compressor in the air conditioning system to increase an operating frequency during the defrosting stage.

According to an embodiment of the present invention, the first control module 100 is specifically configured to identify that an outlet temperature of a condenser in the air conditioning system is lower than a first preset temperature value, and control the air conditioning system to immediately stop heating and to maintain for a third preset time period.

According to an embodiment of the present invention, the second control module 200 is configured to identify that an air pressure difference between an suction air pressure and an exhaust air pressure of the air conditioning system is lower than a preset air pressure value; and control the air conditioning system to immediately enter the defrosting stage.

According to an embodiment of the present invention, before said controlling the air conditioning system to stop heating and to enter the defrosting stage, the second control module is further configured to control the compressor in the air conditioning system to maintain an operating frequency same as that before the heating is stopped, and to turn off after the heating is stopped; and control the outdoor fan to maintain a blowing volume same as that before the heating is stopped to continue supplying air, and to turn off after the heating is stopped.

According to an embodiment of the present disclosure, after entering the defrosting stage, the second control module 200 is further configured to identify that an outlet temperature of a condenser in the air conditioning system is greater than a second preset temperature value, and control the air conditioning system to immediately stop defrosting.

According to an embodiment of the present invention, the third control module 300 is specifically configured to identify that an air pressure difference between an suction air pressure and an exhaust air pressure of the air conditioning system is lower than a preset air pressure value, and control the air conditioning system to restart heating.

According to an embodiment of the present invention, before controlling the air conditioning system to restart heating, the third control module 300 is further configured to control the compressor in the air conditioning system to enter a turn-off state from an operating state, and control the outdoor fan and the indoor fan to continue being in the turn-off state.

According to an embodiment of the present disclosure, the fourth control module 400 is specifically configured to identify that an outlet temperature of a condenser in the air conditioning system is lower than a third preset temperature value, and control the air conditioning system to stop delaying of the outdoor fan and to immediately turn on the outdoor fan.

According to an embodiment of the present invention, before said to immediately turn on the outdoor fan, the fourth control module 400 is further configured to control the compressor in the air conditioning system to operate at a preset operating frequency; and control the outdoor fan and the indoor fan to continue being in the turn-off state.

According to an embodiment of the present invention, after turning on the outdoor fan the fourth control module 400 is further configured to control the outdoor fan to operate for a fourth preset time period; and turn on the indoor fan after the fourth preset time period.

According to an embodiment of the present disclosure, the above device for controlling an air conditioning system further includes: a seventh control module, configured to identify that an outlet temperature of an evaporator in the air conditioning system is greater than a fourth preset temperature value; and control the air conditioning system to stop delaying of the indoor fan and to immediately turn on the indoor fan.

According to an embodiment of the present invention, before turning on the indoor fan, the fourth control module 400 is further configured to control the compressor in the air conditioning system to continue operating at the preset operating frequency; and control the outdoor fan to supply air with a first set blowing volume, and control the indoor fan to continue being in the turn-off state.

According to an embodiment of the present invention, after turning on the indoor fan, the seventh control module is further configured to control the indoor fan to operate for a fifth preset time period, and turn off the indoor fan after the fifth preset time period.

According to an embodiment of the present invention, the above device for controlling an air conditioning system further includes: an eighth control module, configured to identify that the outlet temperature of the condenser in the air conditioning system is lower than a fifth preset temperature value, and control the air conditioning system to turn off the indoor fan and to immediately turn off the outdoor fan.

According to an embodiment of the present invention, before turning off the outdoor fan, the eighth control module is specifically configured to control the compressor in the air conditioning system to continue operating at the preset operating frequency; and control the outdoor fan to supply air with the first set blowing volume and control the indoor fan to supply air with a second set blowing volume.

According to the device for controlling an air conditioning system proposed in embodiments of the present invention, the first control module identifies that the air conditioning system needs to stop heating, and controls the air conditioning system to turn off the indoor fan before the first preset time period for stopping heating; the second control module controls the air conditioning system to stop heating and to enter the defrosting stage; the third control module identifies that the air conditioning system needs to restart heating, and controls the air conditioning system to restart heating; and the fourth control module controls the air conditioning system to delay the second preset time period before turning on an outdoor fan. As such, the indoor fan is turned off ahead of turning off the compressor for heating, thus greatly shortening the defrosting period, and reducing compressor abrasion caused by a large amount of refrigerants dissolved in the compressor and thus the extreme low viscosity in the oil sump due to the extreme low temperature of the compressor after the defrosting stage. Besides, the outdoor fan is delayed to turn on after turning on the compressor for heating, thus avoiding the heat left in the outdoor fan during the defrosting stage from dissipating into environment. In addition, the operating frequency of the compressor is increased during the defrosting stage, thus avoiding the heating throttle element from the oil blockage caused by the extreme low temperature and pressure in the low pressure area of the system at the end of the defrosting stage, thereby greatly enhancing the operation stability and reliability of the air conditioning system.

As shown in Figure 4, the present disclosure provides in an embodiment an air conditioning system 20, including the device 10 for controlling an air conditioning system as described above.

According to the air conditioning system proposed in embodiments of the present invention, by taking advantage of the device for controlling an air conditioning system described above, the indoor fan is turned off ahead of turning off the compressor for heating, thus greatly shortening the defrosting period, and reducing compressor abrasion caused by a large amount of refrigerants dissolved in the compressor and thus the extreme low viscosity in the oil sump due to the extreme low temperature of the compressor after the defrosting stage. Besides, the outdoor fan is delayed to turn on after turning on the compressor for heating, thus avoiding the heat left in the outdoor fan during the defrosting stage from dissipating into environment. In addition, the operating frequency of the compressor is increased during the defrosting stage, thus avoiding the heating throttle element from the oil blockage caused by the extreme low temperature and pressure in the low pressure area of the system at the end of the defrosting stage, thereby greatly enhancing the operation stability and reliability of the air conditioning system.

As shown in Figure 5, the present disclosure provides in an embodiment electronic equipment 1000, including: a memory 1100, a processor 1200, and a computer program, stored in the memory 1200 and executable by the processor, when the program is executed by the processor, the method for controlling an air conditioning system as described above is implemented.

The present invention provides in an embodiment a computer-readable storage medium, having stored a computer program thereon, when the program is executed by a processor, the method for controlling an air conditioning system as described above is implemented.

It would be appreciated by those skilled in the art that embodiments of the present disclosure may be provided as a method, system or computer program product. Thus, the present invention may take a form of an entirely hardware embodiment, an entirely software embodiment, or an embodiment combining both software and hardware. Besides, the present disclosure may take a form of a computer program product implemented on one or more computer-usable storage media (including but not limited to disk storage, CD-ROM, optical storage, etc.) comprising a computer-usable program code.

The present invention is described with reference to the flowcharts and/or block diagrams of methods, devices (systems), and computer program products according to embodiments of this disclosure. It should be understood that each process and/or block in the flowchart and/or block diagram, and the combination of processes and/or blocks in the flowcharts and/or block diagrams can be realized by computer program instructions. These computer program instructions can be provided to the processor of a general-purpose computer, a special-purpose computer, an embedded processor, or other programmable data processing equipment to generate a machine, so that the instructions executed by the processor of the computer or other programmable data processing equipment produce corresponding device configured to implements the indicated functions in one or more processes in the flowcharts, and/or one or more blocks in the block diagrams.

These computer program instructions can also be stored in a computer-readable memory that can direct a computer or other programmable data processing equipment to work in a specific manner, so that the instructions stored in the computer-readable memory produce an article of manufacture including the instruction device. The instruction device implements the indicated functions in one or more processes in the flowcharts, and/or one or more blocks in the block diagrams.

These computer program instructions can also be loaded on a computer or other programmable data processing equipment, so that a series of operation steps are executed on the computer or other programmable equipment to produce computer-implemented processing, such that the instructions executed on the computer or other programmable equipment provide steps for implementing the indicated functions in one or more processes in the flowcharts, and/or one or more blocks in the block diagrams.

It should be noted that in the claims, any reference signs located between parentheses should not be constructed as limitations on the claims. The word "comprising" does not exclude parts or steps not listed in the claims. The word "a" or "an" preceding a component does not exclude a plurality of such components. The present invention can be realized by means of hardware including several different components and by means of a suitably programmed computer. In a unit-related claim listing several devices, several of these devices may be embodied in the same hardware item. The use of the words "first", "second", and "third", etc. do not indicate any order. These words can be interpreted as names.

## Claims

1. A method for controlling an air conditioning system, comprising the following steps:
identifying (S1) that the air conditioning system needs to stop heating, controlling the air conditioning system to turn off an indoor fan before a first preset time period for stopping heating, wherein the indoor fan is turned off ahead of turning off a compressor;
controlling (S2) the air conditioning system to stop heating and to enter a defrosting stage;
identifying (S3) that the air conditioning system needs to restart heating, and controlling the air conditioning system to restart heating; and
controlling (S4) the air conditioning system to delay a second preset time period before turning on an outdoor fan, such that the outdoor fan is turned on after the compressor is turned on.

2. The method according to claim 1, further comprising:
controlling the indoor fan and the outdoor fan to be in a turn-off state during the defrosting stage; and
controlling the compressor in the air conditioning system to increase an operating frequency during the defrosting stage.

3. The method according to claim 2, wherein said controlling the air conditioning system to stop heating comprises:
identifying that an outlet temperature of a condenser in the air conditioning system is lower than a first preset temperature value, and controlling the air conditioning system to immediately stop heating and to maintain for a third preset time period.

4. The method according to claim 3, wherein:
said entering the defrosting stage comprises:
identifying that an air pressure difference between an suction air pressure and an exhaust air pressure of the air conditioning system is lower than a preset air pressure value; and
controlling the air conditioning system to immediately enter the defrosting stage, or
before controlling the air conditioning system to stop heating and to enter the defrosting stage, the method further comprises:
controlling the compressor in the air conditioning system to maintain an operating frequency same as that before the heating is stopped, and to turn off after the heating is stopped; and
controlling the outdoor fan to maintain a blowing volume same as that before the heating is stopped to continue supplying air, and to turn off after the heating is stopped.

5. The method according to claim 2, wherein:
after entering the defrosting stage, the method further comprises:
identifying that an outlet temperature of a condenser in the air conditioning system is greater than a second preset temperature value, and controlling the air conditioning system to immediately stop defrosting, or
said identifying that the air conditioning system needs to restart heating and controlling the air conditioning system to restart heating comprise:
identifying that an air pressure difference between an suction air pressure and an exhaust air pressure of the air conditioning system is lower than a preset air pressure value, and controlling the air conditioning system to restart heating.

6. The method according to claim 2 or 5, wherein before controlling the air conditioning system to restart heating, the method further comprises:
controlling the compressor in the air conditioning system to enter the turn-off state from an operating state, and controlling the outdoor fan and the indoor fan to continue being in the turn-off state.

7. The method according to claim 2, wherein said controlling the air conditioning system to delay the second preset time period before turning on the outdoor fan comprises:
identifying that an outlet temperature of a condenser in the air conditioning system is lower than a third preset temperature value, and controlling the air conditioning system to stop delaying of the outdoor fan and to immediately turn on the outdoor fan.

8. The method according to claim 7, wherein before immediately turning on the outdoor fan, the method further comprises:
controlling the compressor in the air conditioning system to operate at a preset operating frequency; and
controlling the outdoor fan and the indoor fan to continue being in the turn-off state, and
wherein after turning on the outdoor fan, the method further comprises:
controlling the outdoor fan to operate for a fourth preset time period; and
turning on the indoor fan after the fourth preset time period.

9. The method according to claim 8, further comprising:
identifying that an outlet temperature of an evaporator in the air conditioning system is greater than a fourth preset temperature value; and
controlling the air conditioning system to stop delaying of the indoor fan and to immediately turn on the indoor fan.

10. The method according to claim 9, wherein before turning on the indoor fan, the method further comprises:
controlling the compressor in the air conditioning system to continue operating at the preset operating frequency; and
controlling the outdoor fan to supply air with a first set blowing volume, and controlling the indoor fan to continue being in the turn-off state, and
wherein after turning on the indoor fan, the method further comprises:
controlling the indoor fan to operate for a fifth preset time period, and turning off the indoor fan after the fifth preset time period.

11. The method according to claim 10, further comprising:
identifying that the outlet temperature of the condenser in the air conditioning system is lower than a fifth preset temperature value, and controlling the air conditioning system to turn off the indoor fan and to immediately turn off the outdoor fan, and
wherein before turning off the outdoor fan, the method further comprises:
controlling the compressor in the air conditioning system to continue operating at the preset operating frequency; and
controlling the outdoor fan to supply air with the first set blowing volume and controlling the indoor fan to supply air with a second set blowing volume.

12. A device (10) for controlling an air conditioning system (20), comprising:
a first control module (100), configured to identify that the air conditioning system needs to stop heating, configured to control the air conditioning system to turn off an indoor fan before a first preset time period for stopping heating, and configured to turn off the indoor fan ahead of turning off a compressor;
a second control module (200), configured to control the air conditioning system to stop heating and to enter a defrosting stage;
a third control module (300), configured to identify that the air conditioning system needs to restart heating, and control the air conditioning system to restart heating; and
a fourth control module (400), configured to control the air conditioning system to delay a second preset time period before turning on an outdoor fan, and configured to turn on the compressor, such that the outdoor fan is turned on after the compressor is turned on.

13. An air conditioning system (20), comprising an indoor fan, an outdoor fan and a compressor: and a device (10) for controlling the air conditioning system according to claim 12.

14. Electronic equipment (1000), comprising:
a processor (1200), and
a memory (1100) coupled to the processor (1200), the memory storing a program which, when executed by the processor, causes the electronic equipment (1000) to carry out the method for controlling an air conditioning system according to any one of claims 1 to 11.

15. A computer-readable storage medium (1100), having stored thereon a computer program which, when executed by a processor (1200) of an electronic device (1000), cause the electronic device to carry out a method for controlling an air conditioning system according to any one of claims 1 to 11.

## Patentansprüche

1. Verfahren zum Steuern einer Klimaanlage, das die folgenden Schritte beinhaltet:
Identifizieren (S1), dass die Klimaanlage den Heizbetrieb stoppen muss, Steuern der Klimaanlage zum Abschalten eines Innenventilators vor einer ersten voreingestellten Zeitspanne zum Stoppen des Heizbetriebs, wobei der Innenventilator vor dem Abschalten eines Kompressors abgeschaltet wird;
Steuern (S2) der Klimaanlage zum Stoppen des Heizbetriebs und zum Eintreten in eine Auftauphase;
Identifizieren (S3), dass die Klimaanlage den Heizbetrieb erneut starten muss, und Steuern der Klimaanlage zum erneuten Starten des Heizbetriebs; und
Steuern (S4) der Klimaanlage zum Verzögern um eine zweite voreingestellte Zeitspanne vor dem Einschalten eines Außenventilators, so dass der Außenventilator nach dem Einschalten des Kompressors eingeschaltet wird.

2. Verfahren nach Anspruch 1, das ferner Folgendes beinhaltet:
Steuern des Innenventilators und des Außenventilators zum Bleiben in einem Abschaltzustand während der Auftauphase; und
Steuern des Kompressors in der Klimaanlage zum Erhöhen einer Betriebsfrequenz während der Auftauphase.

3. Verfahren nach Anspruch 2, wobei das genannte Steuern der Klimaanlage zum Stoppen des Heizbetriebs Folgendes beinhaltet:
Identifizieren, dass eine Auslasstemperatur eines Kondensators in der Klimaanlage niedriger ist als ein erster voreingestellter Temperaturwert, und Steuern der Klimaanlage zum sofortigen Stoppen des Heizbetriebs und zum Halten für eine dritte voreingestellte Zeitspanne.

4. Verfahren nach Anspruch 3, wobei:
das genannte Eintreten in die Auftauphase Folgendes beinhaltet:
Identifizieren, dass eine Luftdruckdifferenz zwischen einem Ansaugluftdruck und einem Abluftdruck der Klimaanlage niedriger als ein voreingestellter Luftdruckwert ist; und
Steuern der Klimaanlage zum sofortigen Eintreten in die Auftauphase, oder vor dem Steuern der Klimaanlage zum Stoppen des Heizbetriebs und zum Eintreten in die Auftauphase, wobei das Verfahren ferner Folgendes beinhaltet:
Steuern des Kompressors in der Klimaanlage zum Halten einer Betriebsfrequenz auf demselben Wert wie vor dem Heizstopp und zum Abschalten nach dem Heizstopp; und
Steuern des Außenventilators zum Halten eines Blasvolumens auf demselben Wert wie vor dem Heizstopp, um weiter Luft zuzuführen, und zum Abschalten nach dem Heizstopp.

5. Verfahren nach Anspruch 2, wobei:
das Verfahren nach dem Eintreten in die Auftauphase ferner Folgendes beinhaltet:
Identifizieren, dass eine Auslasstemperatur eines Kondensators in der Klimaanlage höher ist als ein zweiter voreingestellter Temperaturwert, und Steuern der Klimaanlage zum sofortigen Stoppen des Auftauens, oder
das genannte Identifizieren, dass die Klimaanlage den Heizbetrieb erneut starten muss, und das Steuern der Klimaanlage zum erneuten Starten des Heizbetriebs Folgendes beinhalten:
Identifizieren, dass eine Luftdruckdifferenz zwischen einem Ansaugluftdruck und einem Abluftdruck der Klimaanlage niedriger ist als ein voreingestellter Luftdruckwert, und Steuern der Klimaanlage zum erneuten Starten des Heizbetriebs.

6. Verfahren nach Anspruch 2 oder 5, wobei das Verfahren vor dem Steuern der Klimaanlage zum erneuten Starten des Heizbetriebs ferner Folgendes beinhaltet:
Steuern des Kompressors in der Klimaanlage zum Eintreten von einem Betriebszustand in den Abschaltzustand, und Steuern des Außenventilators und des Innenventilators zum Bleiben im Abschaltzustand.

7. Verfahren nach Anspruch 2, wobei das genannte Steuern der Klimaanlage zum Verzögern um die zweite voreingestellte Zeitspanne vor dem Einschalten des Außenventilators Folgendes beinhaltet:
Identifizieren, dass eine Auslasstemperatur eines Kondensators in der Klimaanlage niedriger ist als ein dritter voreingestellter Temperaturwert, und Steuern der Klimaanlage zum Stoppen der Verzögerung des Außenventilators und zum sofortigen Einschalten des Außenventilators.

8. Verfahren nach Anspruch 7, wobei das Verfahren vor dem sofortigen Einschalten des Außenventilators ferner Folgendes beinhaltet:
Steuern des Kompressors in der Klimaanlage zum Arbeiten mit einer voreingestellten Betriebsfrequenz; und
Steuern des Außenventilators und des Innenventilators zum Bleiben im Abschaltzustand, und wobei das Verfahren nach dem Einschalten des Außenventilators ferner Folgendes beinhaltet:
Steuern des Außenventilators zum Arbeiten für eine vierte voreingestellte Zeitspanne; und
Einschalten des Innenventilators nach der vierten voreingestellten Zeitspanne.

9. Verfahren nach Anspruch 8, das ferner Folgendes beinhaltet:
Identifizieren, dass eine Auslasstemperatur eines Verdampfers in der Klimaanlage höher ist als ein vierter voreingestellter Temperaturwert; und
Steuern der Klimaanlage zum Stoppen der Verzögerung des Innenventilators und zum sofortigen Einschalten des Innenventilators.

10. Verfahren nach Anspruch 9, wobei das Verfahren vor dem Einschalten des Innenventilators ferner Folgendes beinhaltet:
Steuern des Kompressors in der Klimaanlage zum fortgesetzten Arbeiten mit der voreingestellten Betriebsfrequenz; und
Steuern des Außenventilators zum Zuführen von Luft mit einem ersten eingestellten Blasvolumen, und Steuern des Innenventilators zum Bleiben im Abschaltzustand, und
wobei das Verfahren nach dem Einschalten des Innenventilators ferner Folgendes beinhaltet:
Steuern des Innenventilators zum Arbeiten für eine fünfte voreingestellte Zeitspanne, und Abschalten des Innenventilators nach der fünften voreingestellten Zeitspanne.

11. Verfahren nach Anspruch 10, das ferner Folgendes beinhaltet:
Identifizieren, dass die Auslasstemperatur des Kondensators in der Klimaanlage niedriger als ein fünfter voreingestellter Temperaturwert ist, und Steuern der Klimaanlage zum Abschalten des Innenventilators und zum sofortigen Abschalten des Außenventilators, und
wobei das Verfahren vor dem Abschalten des Außenventilators ferner Folgendes beinhaltet:
Steuern des Kompressors in der Klimaanlage zum fortgesetzten Arbeiten mit der voreingestellten Betriebsfrequenz; und
Steuern des Außenventilators zum Zuführen von Luft mit dem ersten eingestellten Blasvolumen, und Steuern des Innenventilators zum Zuführen von Luft mit einem zweiten eingestellten Blasvolumen.

12. Vorrichtung (10) zum Steuern einer Klimaanlage (20), die Folgendes umfasst:
ein erstes Steuermodul (100), konfiguriert zum Identifizieren, dass die Klimaanlage den Heizbetrieb stoppen muss, konfiguriert zum Steuern der Klimaanlage zum Abschalten eines Innenventilators vor einer ersten voreingestellten Zeitspanne zum Stoppen des Heizbetriebs, und konfiguriert zum Abschalten des Innenventilators vor dem Abschalten eines Kompressors;
ein zweites Steuermodul (200), konfiguriert zum Steuern der Klimaanlage zum Stoppen des Heizbetriebs und zum Eintreten in eine Auftauphase;
ein drittes Steuermodul (300), konfiguriert zum Identifizieren, dass die Klimaanlage den Heizbetrieb erneut starten muss, und zum Steuern der Klimaanlage zum erneuten Starten des Heizbetriebs; und
ein viertes Steuermodul (400), konfiguriert zum Steuern der Klimaanlage zum Verzögern um eine zweite voreingestellte Zeitspanne vor dem Einschalten eines Außenventilators, und konfiguriert zum Einschalten des Kompressors, so dass der Außenventilator nach dem Einschalten des Kompressors eingeschaltet wird.

13. Klimaanlage (20), die einen Innenventilator, einen Außenventilator und einen Kompressor umfasst; und eine Vorrichtung (10) zum Steuern der Klimaanlage nach Anspruch 12.

14. Elektronische Ausrüstung (1000), die Folgendes umfasst:
einen Prozessor (1200), und
einen Speicher (1100), der mit dem Prozessor (1200) gekoppelt ist, wobei der Speicher ein Programm speichert, das bei Ausführung durch den Prozessor bewirkt, dass die elektronische Ausrüstung (1000) das Verfahren zum Steuern einer Klimaanlage nach einem der Ansprüche 1 bis 11 ausführt.

15. Computerlesbares Speichermedium (1100), auf dem ein Computerprogramm gespeichert ist, das bei Ausführung durch einen Prozessor (1200) eines elektronischen Geräts (1000) bewirkt, dass das elektronische Gerät ein Verfahren zum Steuern einer Klimaanlage nach einem der Ansprüche 1 bis 11 ausführt.

## Revendications

1. Un procédé de commande d'un système de climatisation, comprenant les opérations suivantes :
l'identification (S1) que le système de climatisation a besoin d'arrêter de chauffer, la commande du système de climatisation de façon à mettre à l'arrêt un ventilateur d'intérieur avant une première période temporelle prédéfinie pour arrêter le chauffage, où le ventilateur d'intérieur est mis à l'arrêt préalablement à l'arrêt d'un compresseur,
la commande (S2) du système de climatisation de façon à arrêter le chauffage et à entrer dans une étape de dégivrage,
l'identification (S3) que le système de climatisation a besoin de redémarrer le chauffage, et la commande du système de climatisation de façon à redémarrer le chauffage, et
la commande (S4) du système de climatisation de façon à retarder une deuxième période temporelle prédéfinie avant la mise en route d'un ventilateur d'extérieur, de sorte que le ventilateur d'extérieur soit mis en route après la mise en route du compresseur.

2. Le procédé selon la Revendication 1, comprenant en outre :
la commande du ventilateur d'intérieur et du ventilateur d'extérieur de façon à être dans un état à l'arrêt au cours de l'étape de dégivrage, et
la commande du compresseur dans le système de climatisation de façon à augmenter une fréquence de fonctionnement au cours de l'étape de dégivrage.

3. Le procédé selon la Revendication 2, où ladite commande du système de climatisation de façon à arrêter le chauffage comprend :
l'identification qu'une température de sortie d'un condenseur dans le système de climatisation est inférieure à une première valeur de température prédéfinie, et la commande du système de climatisation de façon à arrêter le chauffage immédiatement et à le maintenir ainsi pendant une troisième période temporelle prédéfinie.

4. Le procédé selon la Revendication 3, où :
ladite entrée dans l'étape de dégivrage comprend :
l'identification qu'une différence de pression d'air entre une pression d'air d'aspiration et une pression d'air d'évacuation du système de climatisation est inférieure à une valeur de pression d'air prédéfinie, et
la commande du système de climatisation de façon à entrer immédiatement dans l'étape de dégivrage, ou avant la commande du système de climatisation de façon à arrêter le chauffage et à entrer dans l'étape de dégivrage, le procédé comprend en outre :
la commande du compresseur dans le système de climatisation de façon à maintenir une fréquence de fonctionnement identique à celle avant l'arrêt du chauffage, et de façon à le mettre à l'arrêt après l'arrêt du chauffage, et
la commande du ventilateur d'extérieur de façon à maintenir un volume de soufflage identique à celui avant l'arrêt du chauffage de façon à poursuivre une fourniture d'air, et de façon à le mettre à l'arrêt après l'arrêt du chauffage.

5. Le procédé selon la Revendication 2, où :
après l'entrée dans l'étape de dégivrage, le procédé comprend en outre :
l'identification qu'une température de sortie d'un condenseur dans le système de climatisation est supérieure à une deuxième valeur de température prédéfinie, et la commande du système de climatisation de façon à arrêter immédiatement le dégivrage, ou
ladite identification que le système de climatisation a besoin de redémarrer le chauffage et la commande du système de climatisation de façon à redémarrer le chauffage comprennent :
l'identification qu'une différence de pression d'air entre une pression d'air d'aspiration et une pression d'air d'évacuation du système de climatisation est inférieure à une valeur de pression d'air prédéfinie, et la commande du système de climatisation de façon à redémarrer le chauffage.

6. Le procédé selon la Revendication 2 ou 5, où avant la commande du système de climatisation de façon à redémarrer le chauffage, le procédé comprend en outre :
la commande du compresseur dans le système de climatisation de façon à entrer dans l'état à l'arrêt à partir d'un état de fonctionnement, et la commande du ventilateur d'extérieur et du ventilateur d'intérieur de façon à continuer à être dans l'état à l'arrêt.

7. Le procédé selon la Revendication 2, où ladite commande du système de climatisation de façon à retarder la deuxième période temporelle prédéfinie avant la mise en route du ventilateur d'extérieur comprend :
l'identification qu'une température de sortie d'un condenseur dans le système de climatisation est inférieure à une troisième valeur de température prédéfinie, et la commande du système de climatisation de façon à arrêter le retardement du ventilateur d'extérieur et à mettre en route immédiatement le ventilateur d'extérieur.

8. Le procédé selon la Revendication 7, où avant la mise en route immédiate du ventilateur d'extérieur, le procédé comprend en outre :
la commande du compresseur dans le système de climatisation de façon à fonctionner à une fréquence de fonctionnement prédéfinie, et
la commande du ventilateur d'extérieur et du ventilateur d'intérieur de façon à continuer à être dans l'état à l'arrêt, et
où après la mise en route du ventilateur d'extérieur, le procédé comprend en outre :
la commande du ventilateur d'extérieur de façon à fonctionner pendant une quatrième période temporelle prédéfinie, et
la mise en route du ventilateur d'intérieur après la quatrième période temporelle prédéfinie.

9. Le procédé selon la Revendication 8, comprenant en outre :
l'identification qu'une température de sortie d'un évaporateur dans le système de climatisation est supérieure à une quatrième valeur de température prédéfinie, et
la commande du système de climatisation de façon à arrêter le retardement du ventilateur d'intérieur et à mettre en route immédiatement le ventilateur d'intérieur.

10. Le procédé selon la Revendication 9, où avant la mise en route du ventilateur d'intérieur, le procédé comprend en outre :
la commande du compresseur dans le système de climatisation de façon à poursuivre le fonctionnement à la fréquence de fonctionnement prédéfinie, et
la commande du ventilateur d'extérieur de façon à fournir de l'air avec un premier volume de soufflage défini, et la commande du ventilateur d'intérieur de façon à continuer à être dans l'état à l'arrêt, et
où après la mise en route du ventilateur d'intérieur, le procédé comprend en outre :
la commande du ventilateur d'intérieur de façon à fonctionner pendant une cinquième période temporelle prédéfinie, et la mise à l'arrêt du ventilateur d'intérieur après la cinquième période temporelle prédéfinie.

11. Le procédé selon la Revendication 10, comprenant en outre :
l'identification que la température de sortie du condenseur dans le système de climatisation est inférieure à une cinquième valeur de température prédéfinie, et la commande du système de climatisation de façon à mettre à l'arrêt le ventilateur d'intérieur et à mettre à l'arrêt immédiatement le ventilateur d'extérieur, et
où avant la mise à l'arrêt du ventilateur d'extérieur, le procédé comprend en outre :
la commande du compresseur dans le système de climatisation de façon à poursuivre le fonctionnement à la fréquence de fonctionnement prédéfinie, et
la commande du ventilateur d'extérieur de façon à fournir de l'air avec le premier volume de soufflage défini et la commande du ventilateur d'intérieur de façon à fournir de l'air avec un deuxième volume de soufflage défini.

12. Un dispositif (10) de commande d'un système de climatisation (20), comprenant :
un premier module de commande (100), configuré de façon à identifier que le système de climatisation a besoin d'arrêter de chauffer, configuré de façon à commander le système de climatisation de façon à mettre à l'arrêt un ventilateur d'intérieur avant une première période temporelle prédéfinie pour arrêter le chauffage, et configuré de façon à mettre à l'arrêt le ventilateur d'intérieur préalablement à l'arrêt d'un compresseur,
un deuxième module de commande (200), configuré de façon à commander le système de climatisation de façon à arrêter le chauffage et à entrer dans une étape de dégivrage,
un troisième module de commande (300), configuré de façon à identifier que le système de climatisation a besoin de redémarrer le chauffage, et à commander le système de climatisation de façon à redémarrer le chauffage, et
un quatrième module de commande (400), configuré de façon à commander le système de climatisation de façon à retarder une deuxième période temporelle prédéfinie avant la mise en route d'un ventilateur d'extérieur, et configuré de façon à mettre en route le compresseur, de sorte que le ventilateur d'extérieur soit mis en route après la mise en route du compresseur.

13. Un système de climatisation (20), comprenant un ventilateur d'intérieur, un ventilateur d'extérieur et un compresseur et un dispositif (10) de commande du système de climatisation selon la Revendication 12.

14. Un équipement électronique (1000), comprenant :
un processeur (1200), et
une mémoire (1100) couplée au processeur (1200), la mémoire conservant en mémoire un programme qui, lorsqu'il est exécuté par le processeur, amène l'équipement électronique (1000) à exécuter le procédé de commande d'un système de climatisation selon l'une quelconque des Revendications 1 à 11.

15. Un support à mémoire lisible par ordinateur (1100), possédant conservé en mémoire sur celui-ci un programme informatique qui, lorsqu'il est exécuté par un processeur (1200) d'un dispositif électronique (1000), amène le dispositif électronique à exécuter un procédé de commande d'un système de climatisation selon l'une quelconque des Revendications 1 à 11.
